(19) Europäisches Patentamt / European Patent Office / Office européen des brevets

(11) **EP 2 817 856 B1**

(12) **EUROPEAN PATENT SPECIFICATION**

(45) Date of publication and mention
of the grant of the patent:
**09.05.2018 Bulletin 2018/19**

(51) Int Cl.:
*H01S 3/10* [(2006.01)]          *G02F 1/35* [(2006.01)]
*G02B 6/02* [(2006.01)]

(21) Application number: **13751140.8**

(22) Date of filing: **21.02.2013**

(86) International application number:
**PCT/US2013/027199**

(87) International publication number:
**WO 2013/126616 (29.08.2013 Gazette 2013/35)**

(54) **OPTICAL MODE CONVERSION USING INTERMODAL CHERENKOV RADIATION**

OPTISCHE MODUSUMWANDLUNG MIT INTERMODALER TSCHERENKOW-STRAHLUNG

CONVERSION DE MODE OPTIQUE UTILISANT LA RADIATION CERENKOV INTERMODALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2012 US 201261601110 P**

(43) Date of publication of application:
**31.12.2014 Bulletin 2015/01**

(73) Proprietors:
• **OFS Fitel, LLC**
  **Norcross, GA 30071 (US)**
• **Cornell University**
  **Ithaca, NY 14853 (US)**

(72) Inventors:
• **GRUNER-NIELSEN, Lars**
  **2700 Brønshøj (DK)**
• **XU, Chunhui**
  **Ithaca, NY 14850 (US)**
• **PEDERSEN, Martin Erland, Vestergaard**
  **DK-2100 Koebenhavn Oe (DK)**
• **CHENG, Ji**
  **Beijing 100022 (CN)**

(74) Representative: **Zinkler, Franz et al**
  **Schoppe, Zimmermann, Stöckeler
  Zinkler, Schenk & Partner mbB
  Patentanwälte
  Radlkoferstrasse 2
  81373 München (DE)**

(56) References cited:
**US-A- 4 893 888          US-A- 5 208 827
US-A1- 2008 138 011      US-A1- 2009 262 764
US-A1- 2011 063 718      US-A1- 2011 063 718**

• **FEI LU ET AL: "Dispersion micro-managed holey fiber and coherent blue-violet continuum generation", LASERS AND ELECTRO-OPTICS, 2005. (CLEO). CONFERENCE ON BALTIMORE, MD, USA MAY 22-27, 2005, PISCATAWAY, NJ, USA, IEEE, vol. 2, 22 May 2005 (2005-05-22), pages 1226-1228, XP010876783, ISBN: 978-1-55752-795-0**
• **KE WANG ET AL: "All-fiber, versatile picosecond time-lens light source and its application to Cerenkov radiation generation in higher order mode fiber", CONFERENCE ON LASERS AND ELECTRO-OPTICS (CLEO) AND QUANTUM ELECTRONICS AND LASER SCIENCE CONFERENCE (QELS), 2010 : 16 - 21 MAY 2010, SAN JOSE, CA, USA, IEEE, PISCATAWAY, NJ, USA, 16 May 2010 (2010-05-16), pages 1-2, XP031700696, ISBN: 978-1-55752-890-2**
• **LIN C ET AL: "LARGE-STOKES-SHIFT STIMULATED FOUR-PHOTON MIXING IN OPTICAL FIBERS", APPLIED PHYSICS LETTERS, A I P PUBLISHING LLC, US, vol. 38, no. 7, 1 April 1981 (1981-04-01), pages 479-481, XP000706112, ISSN: 0003-6951, DOI: 10.1063/1.92424**

**Description**

## BACKGROUND

Field of the Invention

Embodiments of the present invention generally relate to optical mode conversion using intermodal Cherenkov radiation. More specifically, embodiments of the present invention relate to optical mode conversion utilizing intermodal four-wave mixing to convert light between modes for complex applications, whereby one of the four waves is generated by Cherenkov radiation.

Description of the Related Art

Fibers supporting light propagation in higher order modes (HOM) have recently received great attention due to the possibility of increasing data transmission capacity through mode-division multiplexing. Nonlinear effects in HOM fibers, such as dispersive wave generation, are also being studied as an efficient approach to nonlinear wavelength conversion. However, previous designs of HOM fibers have always attempted to avoid mode-crossings (i.e. two propagating modes have the same propagation constant at the same wavelength) at operating wavelengths.

For the use of optical HOM fibers, it is desirable for many applications to have some way of coupling/converting light from one mode to another mode. There are many known ways to accomplish such conversion of light based on a linear conversion process. Known linear conversion methods include the use of traditional mode converters, such as long period gratings, phase plates or spatial light modulators with the fiber.

In a typical linear mode conversion process, light may be provided in the fundamental ($LP_{01}$) mode. The light is then passed through a traditional mode converter to convert light to a different mode, *e.g.,* $LP_{02}$. When using a traditional linear mode converter, the converted light is generated at the same wavelength at the input light, and for many applications, this is either acceptable or desirable. However, in certain instances, the operation bandwidth of a given application could be increased by being able to have the converted light generated at a different wavelength than the original input light.

Four-wave mixing is an intermodulation phenomenon in non-linear optics. Normally, four-wave mixing is utilized with various wavelengths within the same mode. As such, the use of a four-wave mixing process to attain mode conversion would traditionally require a grating or other form of known mode converter.

US 2011/063718 A1 describes an apparatus and methods for generating a substantially supercontinuum-free widely-tunable multimilliwatt source of radiation characterized by a narrowband line profile. The apparatus and methods employ nonlinear optical mechanisms in a nonlinear photonic crystal fiber (PCF) by detuning the wavelength of a pump laser to a significant extent relative to the zero-dispersion wavelength (ZDW) of the PCF. Optical phenomena employed for the selective up-conversion in the PCF include four-wave mixing and Cherenkov radiation. Tunability is achieved by varying pump wavelength and power and by substituting different types of PCFs characterized by specified dispersion properties.

FEI LU ET AL, "Dispersion micro-managed holey fiber and coherent blue-violet continuum generation", LASERS AND ELECTRO-OPTICS, 2005, (CLEO) CONFERENCE ON BALTIMORE, MD, USA MAY 22-27, 2005, PISCATAWAY, NJ, USA, IEEE, (20050522), vol. 2, ISBN 978-1-55752-795-0, PAGE 1226 - 1228, describe a sub-mm scale dispersion micro-management to generate coherent blue-violet continuum in a short holey fiber based on longitudinal variations of phase-matching conditions of Cherenkov radiation and four-wave mixing.

## SUMMARY

It is an object of the present invention to provide an approach of nonlinear mode conversion to open up a vast new application area, which may be further enhanced with signal processing such as wavelength conversion, parametric amplification, high speed switching, optical sampling, pulse compression, optical regeneration, or the like.

This object is achieved by the subject matter as defined in the independent claims.

Embodiments of the present invention generally relate to optical mode conversion using intermodal Cherenkov radiation. More specifically, embodiments of the present invention relate to optical mode conversion utilizing intermodal four-wave mixing to convert light between modes for complex applications, whereby one of the four waves is generated from Cherenkov radiation.

In one embodiment of the present invention, a fiber comprises an input end for receiving light in a first mode at a first wavelength, and an output end for outputting light in a desired second mode at a desired second wavelength; wherein the desired second mode is controlled by bending the fiber during an intermodal Cherenkov radiation process.

In another embodiment of the present invention, a system for non-linear mode conversion comprises: a light source for providing an input light in a first mode at a first wavelength; and a fiber comprising: an input end for receiving light in a first mode at a first wavelength; and an output end for outputting light in a desired second mode at a desired second wavelength; wherein the desired second mode is controlled by bending the fiber during an intermodal Cherenkov radiation process.

In yet another embodiment, a method of nonlinear mode conversion of light comprises: providing a light source capable of producing an input light in a first mode at a first wavelength; providing a fiber having an input end for receiving the input light from the light source, and an output end for outputting an output light in a desired second mode at a desired second wavelength; generating the input light at the light source; and utilizing a means for an intermodal Cherenkov radiation process; wherein the desired second mode is controlled by the intermodal Cherenkov radiation process.

BRIEF DESCRIPTION OF THE DRAWINGS

So the manner in which the above-recited features of the present invention can be understood in detail, a more particular description of embodiments of the present invention, briefly summarized above, may be had by reference to embodiments, which are illustrated in the appended drawings. It is to be noted, however, the appended drawings illustrate only typical embodiments of embodiments encompassed within the scope of the present invention, and, therefore, are not to be considered limiting, for the present invention may admit to other equally effective embodiments, wherein:

Figure 1 depicts a plot of an effective index as a function of the wavelength for a straight fiber versus a bended fiber in accordance with embodiments of the present invention;

Figure 2 depicts a plot of the phase-matching condition between Cherenkov radiation in the $LP_{11}$ mode at $\omega_c$ and the pump soliton in the $LP_{02}$ mode at $\omega_p$, in accordance with one embodiment of the present invention;

Figure 3 depicts schematic drawings of the curves for the propagation constants of the $LP_{02}$ and $LP_{11}$ modes, shown in the vicinity of the mode-crossing frequency $\omega_x$, with the effective refractive index of the $LP_{02}$ and $LP_{11}$ mode of the HOM fiber (left), and the dispersion curves of the HOM fiber (right), in accordance with one embodiment of the present invention.

Figure 4 depicts a schematic of a system for generating intermodal Cherenkov radiation in accordance with one embodiment of the present invention;

Figure 5 depicts graphs showing measured spectra for soliton shift and Cherenkov radiation at different input pulse energies in (left) a straight fiber, (center) a fiber coiled with a radius of 14 cm, and (right) a fiber coiled with a radius of 5.5 cm, in accordance with an experimental embodiment of the present invention; and

Figure 6 depicts graphs showing (left) the corresponding optical spectrum and the spatial profiles of the soliton and the Cherenkov radiation, and (right) the measured intensity autocorrelation trace of the Cherenkov radiation, in accordance with an experimental embodiment of the present invention.

The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include", "including", and "includes" mean including but not limited to. To facilitate understanding, like reference numerals have been used, where possible, to designate like elements common to the figures.

DETAILED DESCRIPTION

Embodiments of the present invention generally relate to optical mode conversion using intermodal Cherenkov radiation. More specifically, embodiments of the present invention relate to optical mode conversion utilizing intermodal four-wave mixing to convert light between modes for complex applications, whereby one of the four waves is generated from Cherenkov radiation.

As used herein, the term "about" or "approximately," or derivatives thereof, when referencing a numerical value, should be deemed to include within ten percent of such numerical value in either direction. In addition, when such terms are utilized to described absolutes (e.g., zero), the absolute should be deemed to include within one unit of reasonable measurement in either direction, as would ordinarily be used by those of ordinary skill in the art.

Cherenkov radiation in non-linear optics is also known as nonsolitonic radiation, a special form of four wave mixing where a soliton is phase matched to a dispersive wave. For single mode operations the dispersive wave is generated in the normal dispersion region. The frequency shift between the soliton and the dispersive wave in the optical fiber is the analog of the angle at which Cherenkov radiation is emitted by charged particles in a bulk medium.

In accordance with embodiments of the present invention, it is possible to design a higher order mode (HOM) fiber having at least first and second modes to be involved in a mode conversion process and that the wavelength of an initial input mode (*i.e.,* first mode) and the wavelengths of a desired converted output mode (*i.e.,* second mode) are not the same. Utilizing embodiments of the present invention, it is possible to generate light in different modes and at different wavelengths without being restricted to the wavelength of the initial input mode.

In addition, in certain embodiments, it may be feasible to have four different modes involved in a single four wave mixing process, and multiples thereof if multiple four wave mixing processes are applied, whereby at least one wave in each of the four wave mixing processes is generated from Cherenkov radiation. For the Cherenkov radiation process there are only two distinct waves involved, *i.e.,* the soliton and the dispersive wave, and for the generally known use of Cherenkov radiation, these are in the same mode. However the two components; the soliton and the dispersive wave, can be in two different modes, yielding intermodal Cherenkov radiation. In other embodiments, it might be possible to have a cascade of different intermodal Cherenkov processes by further implementing the processes described herein.

When two optical modes in an optical fiber for some wavelength have the same effective index, this is denoted as a mode-crossing. In accordance with an embodiment of the present invention, a fiber with a mode-crossing may be designed by having a fiber comprising a core and a ring which is separated from the core by a trench. Such a design may be known as a triple-clad design. By design, for a given wavelength range, the $LP_{02}$ mode of such a fiber can become more bound to the ring at short wavelengths and more bound to the core at longer wavelengths, while the $LP_{11}$ mode is bound in the ring for the whole wavelength range considered. Thus, in such a fiber, the $LP_{02}$ mode will have a larger effective index than the $LP_{11}$ mode at shorter wavelengths. As such, as the $LP_{02}$ mode makes the transition from being a ring mode to a core mode at a longer wavelength, there likely will be mode-crossing between the $LP_{02}$ and $LP_{11}$ modes. Such mode-crossing occurs because when the $LP_{11}$ is ring mode and the $LP_{02}$ is a core mode, the $LP_{11}$ mode will be better bounded to the core than the $LP_{02}$ mode, and thus, the $LP_{11}$ mode have a larger effective index.

In a nonlinear four wave mixing scheme, four waves are used to create nonlinear coupling, and are generally phase-matched together with a non-zero transverse field overlap to achieve strong coupling. The waves utilized in the four wave mixing process may include either of continuous waves or pulsed waves. In one embodiment of the present invention, such a mixing process utilizes a third order nonlinear interaction between the doped silica material and the optical waves.

The four waves in a general four wave mixing process can all be at different wavelengths, although such different wavelengths are not required. In one embodiment, each of the waves will be in the same mode, and thus have the same angular symmetry, and may be readily mixed. In another embodiment, one of the waves is in a mode having a different angular symmetry than the three other waves, and thus, there may be no coupling between all of the waves. In yet another embodiment, between the four waves there are two waves with modes having the same angular symmetry, and two other waves having modes with different angular symmetry. In such an embodiment, coupling between each of waves is possible, if the phase-matching requirement is satisfied.

Within the optical nonlinear community, it is well know that Cherenkov radiation can be generated from a soliton, in a type of four wave mixing where three of the waves come from the soliton, and the fourth wave is the Cherenkov radiation or where three of the waves come from the Cherenkov radiation, and the fourth wave is the soliton. The Cherenkov radiation which is a dispersive wave that is phase-matched to the waves from the soliton. Generally, the soliton and the Cherenkov radiation are in the same optical mode. For embodiments of the present invention, however, it is not necessary that the soliton pulse that generates the Cherenkov radiation is in the same mode, as long as the phase-matching requirement can be satisfied along with a transverse field overlap that is non-zero.

In accordance with embodiments of the present invention, by designing an optical fiber to have a mode-crossing for a particular wavelength of interest, it is possible to achieve both wavelength and mode conversion by deformation of the optical fiber, *e.g.,* by bending the fiber, via what is known as an intermodal Cherenkov radiation process.

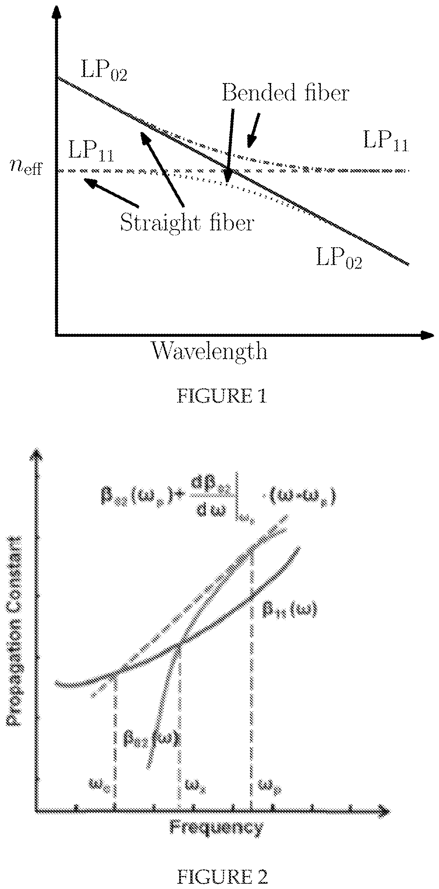

Figure 1 depicts a plot of an effective index as a function of the wavelength for a straight fiber versus a bended fiber in accordance with embodiments of the present invention. The bended fiber introduces a tilted index profile of refraction for each mode. It can be observed that there is no mode-crossing in bended fiber. As such, the soliton in the bended fiber is coupled to a dispersive wave via the Cherenkov radiation process, where both the soliton and the dispersive wave are in the same mode of the bended fiber. As the fiber is straightened, the light of the soliton in the bended fiber mode will become a $LP_{02}$ mode and the dispersive wave will become a $LP_{11}$ mode. Therefore, in the bended fiber, the intermodal coupling is just a normal single mode Cherenkov coupling.

Accordingly, by bending the fiber, the angular symmetry of the modes is broken, and the orthogonality of the angular symmetries between the waves no longer exists. Thus, it is possible to have a coupling between two modes when bent, where in the straightened fiber would have had a different angular symmetry, and therefore been orthogonal.

A fiber may be bent or the profile similarly deformed using any known technique to achieve substantially the same results. For example, other methods include: using a micro-bend-grating, using a heat source to create a temperature gradient across the index profile to create the same tilde index profile as a bend, using a single stress rod in the fiber to create an asymmetric stress profile, using a fiber with electrodes inserted to create an electrical poled fiber, or if the waveguide is made of an material different than the fiber, an electric field generated thereby may also create a tilde index profile, for example, in a silicon waveguide.

For an efficient coupling it is also necessary to have phase-matching between two modes. Such phase-matching may occur in a straight fiber, where two modes have a mode-crossing, indicating that the propagation constant is almost the same for the two modes. In addition, it is indicative that for one of the modes the propagation constant is relatively decreasing, and for the other mode the propagation constant is relatively increasing. The phase-matching equations can be written as:

$$\varphi_{p,02}(\omega_p) = \beta_{p,02}(\omega_p) \cdot z - \omega_p \cdot \frac{z}{v_g} + \frac{1}{2}\gamma P = \beta_{p,02}(\omega_p) \cdot z - \left.\frac{d\beta_{p,02}}{d\omega}\right|_{\omega_p} \cdot \omega_p \cdot z + \frac{1}{2}\gamma P \quad (1)$$

$$\varphi_{c,11}(\omega_c) = \beta_{c,11}(\omega_c) \cdot z - \omega_c \cdot \frac{z}{v_g} = \beta_{c,11}(\omega_c) \cdot z - \left.\frac{d\beta_{p,02}}{d\omega}\right|_{\omega_p} \cdot \omega_c \cdot z \quad (2)$$

where $\beta$ is the propagation constant and $\omega$ is the frequency. The subscripts signify the pump soliton (p) and the Cherenkov radiation (c) in the $LP_{02}$ mode (02) and the $LP_{11}$ mode (11), respectively. $v_g = (d\beta/d\omega)^{-1}$ is the group velocity of the soliton. $\beta(\omega)$ can be derived from the effective refractive index ($n_{eff}$) of the fiber as a function of $\omega$. P and $\gamma$ are the peak power of the soliton and the nonlinear coefficient, respectively. The nonlinear contribution, represented by the last term in Eq. (1), can generally be neglected when the peak power is on the order of 10 kW or less. Based on Eq. (1) and (2), the phase matching condition $\varphi_c = \varphi_p$ then becomes,

$$\beta_{c,11}(\omega_c) = \beta_{p,02}(\omega_p) + \left.\frac{d\beta_{p,02}}{d\omega}\right|_{\omega_p} \cdot (\omega_c - \omega_p) \quad (3)$$

The solution of Eq. 3 can be examined graphically seen in Figure 2. Figure 2 depicts a plot of the phase-matching condition between Cherenkov radiation in the $LP_{11}$ mode at $\omega_c$ and the pump soliton in the $LP_{02}$ mode at $\omega_p$, in accordance with one embodiment of the present invention. When the soliton propagates with anomalous dispersion (i.e., $\beta_{p,\,02}$ has negative curvature) at $\omega_p$ higher than the mode-crossing frequency $\omega_x$, a solution can be found at $\omega_c$ lower than $\omega_x$ that satisfies Eq. 3. Thus, a phase matched, Cherenkov radiation wave can be generated.

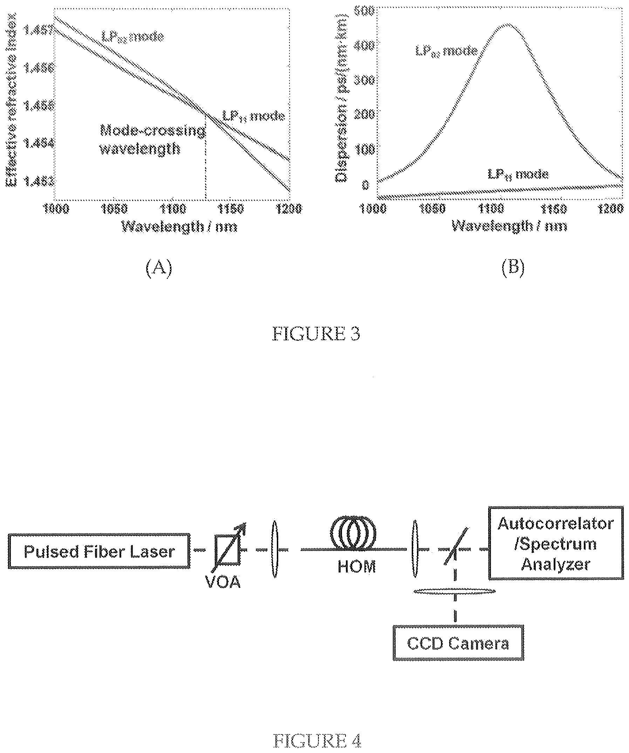

Figure 3 depicts schematic drawings of the curves for the propagation constants of the $LP_{02}$ and $LP_{11}$ modes, shown in the vicinity of the mode-crossing frequency $\omega_x$, with the effective refractive indices of the $LP_{02}$ and $LP_{11}$ modes of the HOM fiber (left), and the dispersion curves of the HOM fiber (right), in accordance with one embodiment of the present invention.

By changing the bend radius of the fiber, it possible to control the strength of the nonlinear coupling as the more deformed the fiber becomes the more the angular symmetry is broken. With the bending for the fiber, the wavelength where there is phase-matching is also perturbed, and thus it might possible also to tune the wavelength of the converted mode. In alternative embodiments, the deformation of the optical fiber does not necessarily have to occur by bending the fiber; that is, any other means of deformation that would break the angular symmetry are supported.

Experimental Embodiment

In one exemplary embodiment, described in more detail below, an experimental setup, such as the system shown in Figure 4, is provided for intermodal Cherenkov radiation in an HOM fiber. As shown in Figure 4, the experiment comprised a light source, a variable optical attenuator, an HOM fiber, an optical spectrum analyzer and a means for recording the process, such as a camera.

In the experiment conducted, the light source was an IMRA FCPA μJewel™ D400 laser, which outputs in free space a 1-MHz pulse train at 1045 nm. In such a laser, the pulses have an autocorrelation FWHM of 600 fs. The power coupled into the fiber is controlled by a variable optical attenuator, which consists of a half-wave-plate and a linear polarizer. An achromatic objective coupled light into 90 cm of an HOM fiber mounted on a three-axis stage. The position of the fiber end is optimized to achieve maximal excitation in the $LP_{02}$ mode. The output of the HOM fiber was characterized by an optical spectrum analyzer and a second-order interferometric autocorrelator. The spatial profile of the fiber output then was magnified by a factor of 250 in a 4f imaging system, and recorded by a CCD camera.

In considering the intended operational parameters, a desired index profile of the HOM fiber was constructed. Such construction process is described in detail in commonly owned United States Patent Application Serial No. 13/945,475, filed October 9, 2012, the disclosure of which is incorporated by reference herein in its entirety.

Regarding the index profile of the fiber, the fiber comprises a central core, an inner trench surrounding the core, a ring surrounding the trench, an outer trench surrounding the ring, and an outer cladding.

In some embodiments, the central core of the fiber may generally have a raised index region, having a radius of between about $0.75\mu m$ to about $2.0\mu m$, and having an index difference to the outer cladding of between about 20.0 to about 40.0 (measured in $10^{-3}$). In one exemplary embodiment, the central core may comprise $SiO_2$ doped with an appropriate amount of $GeO_2$ to achieve a desired index, but may comprise other dopants.

The inner trench may be a depressed index region, having a width of between about $1.75\mu m$ to $2.5\mu m$, and having an index difference to the outer cladding of between about -3.0 to about -13.0 (measured in $10^{-3}$). The inner trench may generally comprise $SiO_2$ doped with the appropriate amount of F, and optionally $GeO_2$, to achieve a desired index.

The ring may be a raised index region, having a width of between about $2.0\mu m$ to $5.0\mu m$, and having an index difference to the outer cladding of between about 5.0 to about 20.0 (measured in $10^{-3}$). The ring may generally comprise $SiO_2$ doped with the appropriate amount of $GeO_2$, and optionally F, to achieve a desired index.

The outer trench generally has a width of between about $1.75\mu m$ to $4.5\mu m$, and has an index difference to the outer cladding of between about 1.5 to about -3.5 (measured in $10^{-3}$). The outer trench may generally comprise $SiO_2$ doped with the appropriate amount of $P_2O_5$, F, and optionally $GeO_2$, to achieve a desired index.

In many embodiments, the outer cladding comprises $SiO_2$, and has an outer radius of between about $50\mu m$ to about $75\mu m$.

The specific design of one exemplary first designed fiber is shown in Table 1 below:

**Table 1 - Exemplary Fiber**

| The LS5 fiber | | |
|---|---|---|
| Region | Dimension | Index difference to outer cladding |
| Core | Radius = 1.25 $\mu m$ | $\Delta n = 28.5 \cdot 10^{-3}$ |
| Trench | Width. = 2.09 $\mu m$ | $\Delta n = -5.9 \cdot 10^{-3}$ |
| Ring | Width = 3.51 $\mu m$ | $\Delta n = 10.5 \cdot 10^{-3}$ |
| Cladding | Width = 2.84 $\mu m$ | $\Delta n = -0.5 \cdot 10^{-3}$ |
| Outer Cladding | Radius = 62.5 $\mu m$ | $\Delta n = 0$ |

The experimental HOM fiber was designed to generate a high energy soliton in the $LP_{02}$ mode. As designed, through soliton self-frequency shift, the soliton will red-shift towards a mode-crossing wavelength, and excite Cherenkov radiation in the $LP_{11}$ mode. In addition, the designed experimental fiber provides the $LP_{02}$ and $LP_{11}$ mode have anomalous and normal dispersion, respectively, between 1000 and 1200 nm with the mode-crossing wavelength at 1120 nm.

As a result of the experiment, a high energy soliton at 1085 nm was generated in the $LP_{02}$ mode of the fiber, with input pulse energy of 14.4 nJ and propagation distance of 90 cm. In the straight HOM fiber, the central wavelength of the soliton was capable of being continuously tuned between 1085 nm and 1120 nm. It was noted that mode coupling induced by bending of the fiber produced spectral modulation on the soliton at 1120 nm. However, Cherenkov radiation in the $LP_{11}$ mode cannot be observed in the straight fiber. Such observation was consistent with the theoretical prediction that the modal overlap integral vanishes without significant perturbation.

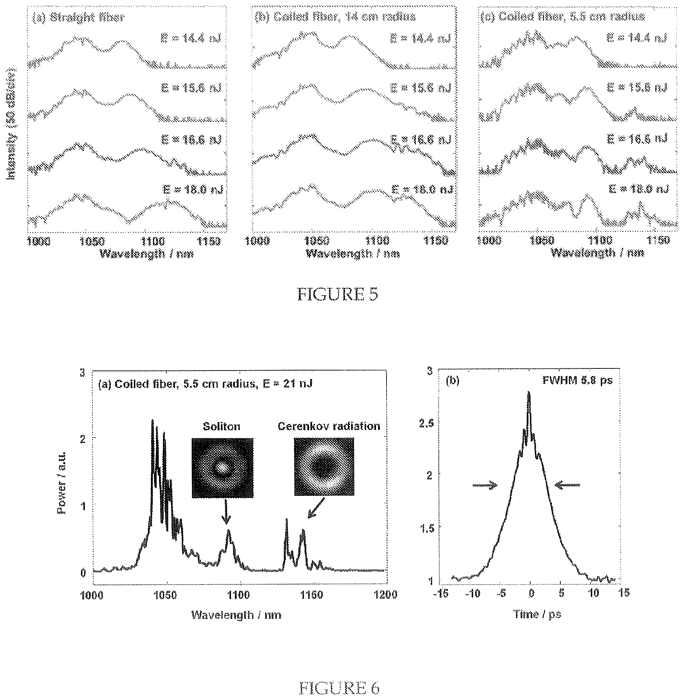

Figure 5 depicts measured spectra for soliton shift and Cherenkov radiation at different input pulse energies in (left) a straight fiber, (center) a fiber coiled with a radius of 14 cm, and (right) a fiber coiled with a radius of 5.5 cm, in accordance with the experimental embodiment described herein. The Figure shows that, by bending the HOM fiber, the mode overlap integral no longer vanishes, resulting in intermodal nonlinearity for efficient generation of Cherenkov radiation. At 18 nJ input energy, Cherenkov radiation can be clearly observed at wavelengths longer than 1130 nm for bending radii smaller than 14 cm. It is also apparent from Figure 5 that the wavelength separation between the Cherenkov radiation and the soliton is larger for a smaller bending radius. Accordingly, the experimental results show that the spectra of Cherenkov radiation can be effectively tuned by controlling deformations to the fiber. It should be noted, however, that different input polarizations did not affect the spectral evolution and the wavelength of Cherenkov radiation, indicating that the intermodal Cherenkov radiation created by waveguide bending is not a polarization effect.

As a result of the experiment, the Cherenkov radiation in the HOM fiber with 5.5 cm bending radius was observed.

At 21 nJ input energy, a 6 nJ soliton at 1093 nm excites a 1.5 nJ Cherenkov pulse in the LP11 mode at 1140 nm. Such measured wavelength of the Cherenkov radiation matches the solution from Eq. 3 above based on the $n_{eff}$ values and the wavelength of the pump soliton.

Figure 6 depicts graphs showing (left) the corresponding optical spectrum and the spatial profiles of the soliton and the Cherenkov radiation, and (right) the measured intensity autocorrelation trace of the Cherenkov radiation, in accordance with the experimental embodiment described herein. According to the intensity autocorrelation measurement, the pulse width of the Cherenkov radiation is 5.8 ps. The Cherenkov pulse broadens due to dispersion in the $LP_{11}$ mode as well as the temporal walk-off between the soliton and the Cherenkov radiation. Thus, the experiment shows that simultaneous wavelength and mode conversion can be achieved through the use of intermodal Cherenkov radiation.

While the foregoing is directed to embodiments of the present invention, other and further embodiments of the invention may be devised without departing from the basic scope thereof. It is also understood that various embodiments described herein may be utilized in combination with any other embodiment described, without departing from the scope contained herein. In addition, embodiments of the present invention may be further scalable, as particular applications may require.

**Claims**

1. A system comprising:

     a light source arranged to provide an input light in a first mode at a first wavelength and
     a fiber, the fiber comprising:

          an input end arranged to receive light in a first mode at a first wavelength;
          an output end arranged to output light; and
          means for applying intermodal four-wave mixing to convert the first mode at the first wavelength to the second mode at the desired second wavelength,
          wherein the system is arranged to control the desired second mode by deforming the fiber during an intermodal Cherenkov radiation process,
          wherein the fiber comprises a higher-order mode fiber, and
          wherein the system is arranged to provide at least one of the waves of the four wave mixing process as a Cherenkov radiation wave,
          so as to output light at the output end in a desired second mode at a desired second wavelength.

2. The system of claim 1, wherein the phases of the modes involved in the intermodal four-wave mixing process match.

3. The system of claim 1, wherein the four-wave mixing process maintains a non-zero transverse field overlap.

4. A method of nonlinear mode conversion of light comprising:

     providing a light source capable of producing an input light in a first mode at a first wavelength;
     providing a system of one of claims 1 to 3;
     generating the input light at the light source;
     receiving the input light from the light source at the input end of the fiber;
     controlling the desired second mode by deforming the fiber during an intermodal Cherenkov radiation process; and
     outputting an output light at the output end of the fiber.

**Patentansprüche**

1. Ein System, das folgende Merkmale aufweist:

     eine Lichtquelle, die dazu angeordnet ist, ein Eingangslicht in einer ersten Mode mit einer ersten Wellenlänge bereitzustellen, und
     eine Faser, wobei die Faser folgende Merkmale aufweist:

          ein Eingangsende, das dazu angeordnet ist, Licht in einer ersten Mode mit einer ersten Wellenlänge zu empfangen;

ein Ausgangsende, das dazu angeordnet ist, Licht auszugeben; und

eine Einrichtung zum Anwenden einer Intermoden-Vierwellmischung, um die erste Mode mit der ersten Wellenlänge in die zweite Mode mit der gewünschten zweiten Wellenlänge umzuwandeln,

wobei das System dazu angeordnet ist, die gewünschte zweite Mode zu steuern, indem es die Faser während eines Intermoden-Tscherenkow-Strahlungsprozesses verformt,

wobei die Faser eine Faser einer Mode höherer Ordnung aufweist, und

wobei das System dazu angeordnet ist, zumindest eine der Wellen des Vierwellenmischungsprozesses als eine Tscherenkow-Strahlungswelle bereitzustellen,

um Licht an dem Ausgangsende in einer gewünschten zweiten Mode mit einer gewünschten zweiten Wellenlänge auszugeben.

**2.** Das System gemäß Anspruch 1, bei dem die Phasen der an dem Intermoden-Vierwellenmischungsprozess beteiligten Moden zusammenpassen.

**3.** Das System gemäß Anspruch 1, bei dem der Vierwellenmischungsprozess eine nicht null betragende Querfeldüberlappung aufrechterhält.

**4.** Ein Verfahren einer nichtlinearen Modenumwandlung von Licht, das folgende Schritte aufweist:

Bereitstellen einer Lichtquelle, die in der Lage ist, ein Eingangslicht in einer ersten Mode mit einer ersten Wellenlänge zu erzeugen;

Bereitstellen eines Systems gemäß einem der Ansprüche 1 bis 3;

Erzeugen des Eingangslichts an der Lichtquelle;

Empfangen des Eingangslichts von der Lichtquelle an dem Eingangsende der Faser;

Steuern der gewünschten zweiten Mode durch Verformen der Faser während eines Intermoden-Tscherenkow-Strahlungsprozesses; und

Ausgeben eines Ausgangslichts an dem Ausgangsende der Faser.

## Revendications

**1.** Système, comprenant:

une source de lumière aménagée pour fournir une lumière d'entrée dans un premier mode à une première longueur d'onde, et

une fibre, la fibre comprenant:

une extrémité d'entrée aménagée pour recevoir de la lumière dans un premier mode à une première longueur d'onde;

une extrémité de sortie aménagée pour sortir de la lumière; et

un moyen pour appliquer un mélange de quatre ondes intermodal pour convertir le premier mode à la première longueur d'onde au deuxième mode à la deuxième longueur d'onde désirée,

dans lequel le système est aménagé pour commander le deuxième mode désiré en déformant la fibre pendant un processus de rayonnement de Tcherenkov intermodal,

dans lequel la fibre comprend une fibre de mode d'ordre supérieur, et

dans lequel le système est aménagé pour fournir au moins l'une des ondes du processus de mélange de quatre ondes comme onde de rayonnement de Tcherenkov,

de manière à sortir de la lumière à l'extrémité de sortie dans un deuxième mode désiré à une deuxième longueur d'onde désirée.

**2.** Système selon la revendication 1, dans lequel les phases des modes impliqués dans le processus de mélange de quatre ondes intermodal coïncident.

**3.** Système selon la revendication 1, dans lequel le processus de mélange de quatre ondes maintient un recouvrement de champ transversal différent de zéro.

**4.** Procédé de conversion de mode non linéaire de la lumière, comprenant le fait de:

prévoir une source de lumière à même de produire une lumière d'entrée dans un premier mode à une première longueur d'onde;

prévoir un système selon l'une des revendications 1 à 3;

générer la lumière d'entrée à la source de lumière;

recevoir la lumière d'entrée de la source de lumière à l'extrémité d'entrée de la fibre;

commander le deuxième mode désiré en déformant la fibre pendant un processus de rayonnement de Tcherenkov intermodal; et

sortir une lumière de sortie à l'extrémité de sortie de la fibre.

FIGURE 1

FIGURE 2

(A)                                        (B)

FIGURE 3

FIGURE 4

FIGURE 5

FIGURE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011063718 A1

- US 13945475 B

### Non-patent literature cited in the description

- Dispersion micro-managed holey fiber and coherent blue-violet continuum generation. **FEI LU et al.** LASERS AND ELECTRO-OPTICS, 2005, (CLEO) CONFERENCE ON BALTIMORE, MD, USA MAY 22-27, 2005. IEEE, 22 May 2005, vol. 2, 1226-1228